(19) Europäisches Patentamt
European Patent Office
Office européen des brevets

(11) **EP 2 031 747 B1**

(12) **EUROPÄISCHE PATENTSCHRIFT**

(45) Veröffentlichungstag und Bekanntmachung des Hinweises auf die Patenterteilung:
**06.04.2011 Patentblatt 2011/14**

(51) Int Cl.:
*H02P 3/20* *(2006.01)*     *H02P 3/24* *(2006.01)*

(21) Anmeldenummer: **07017244.0**

(22) Anmeldetag: **03.09.2007**

(54) **Verfahren zur Auslaufsteuerung einer Asynchronmaschine**

Method for discontinuation of an asynchronous machine

Procédé de commande de sortie d'une machine asynchrone

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**04.03.2009 Patentblatt 2009/10**

(73) Patentinhaber: **SIEMENS AKTIENGESELLSCHAFT**
**80333 München (DE)**

(72) Erfinder:
  • **Hertz, Dirk**
    **92260 Fichtenhof (DE)**
  • **Runggaldier, Diethard**
    **96135 Stegaurach (DE)**
  • **Zitzler, Stefan**
    **92421 Schwandorf (DE)**

(56) Entgegenhaltungen:
WO-A-01/71902     DE-A1- 4 310 485
DE-U1- 8 707 425

• **PLACHETKA S: "MIT ODER GEGEN DEN STROM DREHSTROMMOTOREN SICHER BREMSEN" ELEKTROTECHNIK, VOGEL VERLAG K.G. WURZBURG, DE, Bd. 76, Nr. 6, 13. Juni 1994 (1994-06-13), Seiten 30-32, XP000438395 ISSN: 1431-9578**
• **PLACHETKA S: "ZUVERLAESSIGE ABBREMSUNG VON DREHSTROMMOTOREN, TEIL 2" UND- ODER- NOR + STEUERUNGSTECHNIK, DISTRIBUTION VERLAG GMBH. MAINZ, DE, Bd. 25, Nr. 5, 1. Mai 1992 (1992-05-01), Seiten 26-27, XP000304462**

**Beschreibung**

Die Erfindung betrifft ein Verfahren zur Auslaufsteuerung einer Asynchronmaschine.

Asynchronmaschinen werden weit verbreitet zu verschiedenen Antriebszwecken verwendet. Beim Start einer Asynchronmaschine ist es von Interesse, die Anlaufströme sowie das Anlaufdrehmoment der Asynchronmaschine zu begrenzen bzw. mit steigender Drehzahl der Asynchronmaschine langsam zu steigern. Ein solcher Sanftanlauf ist für verschiedene technische Anwendungen von Interesse. Ein Sanftanlauf kann durch eine Dosierung der elektrischen Leistung, die der Asynchronmaschine zugeführt wird, realisiert werden. Die Regelung der elektrischen Leistung kann beispielsweise mit einem Phasenanschnittsteuerung realisiert werden.

Asynchronmaschinen können insbesondere zum Antrieb von Werkzeugen oder Maschinen mit hohem Massenträgheitsmoment verwendet werden. Beispielsweise kann es sich bei solchen Maschinen um Hobelmaschinen, Fräsen, Kreissägen etc. in der holzverarbeitenden Industrie handeln. Aus Sicherheitsgründen ist insbesondere bei solchen Maschinen gefordert, dass der Auslauf nach dem Abschalten der Maschine möglichst kurz ist. Typischerweise werden Auslaufzeiten zwischen 10 Sekunden und 20 Sekunden gefordert. Zumindest sollte die Auslaufzeit der Asynchronmaschine nicht länger als die Hochlaufzeit sein.

Es ist bekannt zum Abbremsen einer Asynchronmaschine zwei Phasen der Maschine mit einer Gleichspannung oder einer gleichgerichteten Wechselspannung zu beaufschlagen, um so eine Bremswirkung zu erzielen. Dieses sogenannte DC-Bremsen weist jedoch verschiedene technische Nachteile auf. Wird der DC-Bremsvorgang für eine Maschine mit reinem Gleichstrom bewirkt, so ist zu diesem Zweck eine Gleichstromquelle notwendig. Diese ist technisch aufwendig zu realisieren. Wird der DC-Bremsvorgang durch eine gleichgerichtete Wechselspannung, im Rahmen einer Phasenanschnittsteuerung dadurch realisiert, dass jeweils nur eine Halbwelle der gleichgerichteten Spannung zum DC-Bremsen verwendet wird (dies entspricht im Prinzip einer Einweg-Gleichrichtung), so kann wegen der relativ kurzen Stromflusszeiten nur ein geringes Bremsmoment erzeugt werden. Durch die unsymmetrischen Stromverläufe werden außerdem Verluste innerhalb der Asynchronmaschine hervorgerufen. Für Maschinen oder Werkzeuge mit sehr hohem Massenträgheitsmoment können deswegen vielfach die geforderten kurzen Auslaufzeiten allein durch DC-Bremsen nicht erreicht werden.

Um die geforderten Bremszeiten zu erreichen, ist es oftmals unumgänglich, den Abbremsvorgang unter Verwendung eines Frequenzumrichters zu realisieren. Frequenzumrichter verbrauchen jedoch wertvollen Bauraum und sind außerdem teuer in der Anschaffung.

Aufgabe der vorliegenden Erfindung ist es, ein Verfahren zur Auslaufsteuerung einer Asynchronmaschine anzugeben, dass zumindest insoweit gegenüber dem Stand der Technik verbessert ist, dass mit geringerem technischen Aufwand ein effektives Abbremsen der Asynchronmaschine ermöglicht ist.

Die Aufgabe mit den in Anspruch 1 genannten Maßnahmen gelöst.

Der Erfindung liegt dabei die Überlegung zu Grunde, den Abbremsvorgang dadurch zu realisieren, dass ein Großteil der kinetischen Energie (Rotationsenergie) der laufenden Asynchronmaschine durch Abbremsen der Asynchronmaschine im Reversierbetrieb abgebaut wird. Nach erfolgtem Abbremsen der Asynchronmaschine im Reversierbetrieb wird die restliche vorhandene kinetische Energie (Rotationsenergie) durch DC-Bremsen der Asynchronmaschine abgebaut. Bei einer Reversierung der Phasen werden gegenüber dem Normalbetrieb der Asynchronmaschine zwei der drei Phasen miteinander vertauscht. Durch eine solche Reversierung der Phasen wird erreicht, dass der Ständer der Asynchronmaschine ein magnetisches Drehfeld erzeugt, welches einen gegenüber der aktuellen Drehrichtung des Rotors entgegengesetzten Drehsinn aufweist. Im Reversierbetrieb der Asynchronmaschine wird ein großes Bremsmoment auf den Rotor der Asynchronmaschine ausgeübt. Bei einem derartigen Abbremsvorgang stellt sich jedoch das technische Problem, dass die im Reversierbetrieb der Asynchronmaschine zugeführte elektrische Energie möglichst genau so groß sein sollte, dass die Asynchronmaschine und gegebenenfalls weitere angetriebene Bauteile vollständig zum Stillstand kommen. Ist die der Asynchronmaschine im Reversierbetrieb zugeführte elektrische Energie größer als die Rotationsenergie der Asynchronmaschine einschließlich der Rotationsenergie der angetriebenen Bauteile, so wird gegebenenfalls am Ende des Reversierbetriebes die Asynchronmaschine entgegen der ursprünglichen Laufrichtung in Bewegung sein. Ist die im Reversierbetrieb der Asynchronmaschine zugeführte elektrische Energie kleiner als die Rotationsenergie der Asynchronmaschine einschließlich der angetriebenen Teile, so wird am Ende des Reversierbetriebes die Asynchronmaschine nicht vollständig zum Stillstand gelangen. Beide der zuvor beschriebenen Fälle sind technisch nicht erwünscht. Insbesondere wurden beide Fälle die geforderten Sicherheitsanforderungen nicht erfüllen.

Nach der erfindungsgemäßen Überlegung wird daher beim Anlauf der Asynchronmaschine die Energie gemessen, welche aufgewendet wird, bis die Asynchronmaschine ihre Betriebsdrehzahl erreicht hat. Unter einer Betriebsdrehzahl ist in diesem Zusammenhang eine für den Betrieb der Asynchronmaschine gewünschte vorgegebene feste Drehzahl zu verstehen, insbesondere kann es sich bei der Betriebsdrehzahl um die Nenndrehzahl der Asynchronmaschine handeln. Entsprechend wird bei einem späteren Abbremsvorgang der Asynchronmaschine im Reversierbetrieb eine elektrische Energie zugeführt, welche kleiner oder gleich derjenigen Energie ist, welche zum Anlauf der Asynchronmaschine aufgewendet wurde. Auf diese Weise kann vermieden werden, dass die Asynchronmaschine am Ende des Reversierbetriebes in den Rückwärtslauf übergeht.

Nach erfolgtem Abbremsen der Asynchronmaschine im Reversierbetrieb weist diese eine Restdrehzahl (restliche Rotationsenergie) auf, die durch DC-Bremsen abgebaut wird. Dabei werden zwei der drei Phasen der Asynchronmaschine mit einem gleichgerichteten Wechselstrom beaufschlagt.

Erfindungsgemäß soll das Verfahren zur Auslaufsteuerung einer Asynchronmaschine die folgenden Schritte umfassen:

- während des Hochlaufens der Asynchronmaschine aus dem Stillstand bis zur Betriebsdrehzahl wird der Wert einer Startenergie ($E_{start}$) bestimmt und gespeichert. Ein Abbremsen der Asynchronmaschine erfolgt im Reversierbetrieb mit einer Bremsenergie ($E_{stop}$) die der Startenergie ($E_{start}$) multipliziert mit einem Korrekturfaktor ($\delta$) entspricht, wobei der Korrekturfaktor ($\delta$) einen Wert zwischen 0 und 1 annimmt. Ein weiteres Abbremsen der Asynchronmaschine nach erfolgten Abbremsen im Reversierbetrieb erfolgt durch DC-Bremsen.

Das erfindungsgemäßen Verfahren weist insbesondere die folgenden Vorteile auf.

Mit dem erfindungsgemäßen Verfahren kann eine Asynchronmaschine, in einer vorgegebenen Zeit sicher abgebremst werden. Insbesondere kann eine Asynchronmaschine, die Teile mit großen Massenträgheitsmomenten antreibt sicher abgebremst werden. Vorteilhaft kann auf einen Umrichter zur Auslaufsteuerung der Asynchronmaschine verzichtet werden.

Vorteilhafte Ausgestaltungen des erfindungsgemäßen Verfahrens gehen aus den von Anspruch 1 abhängigen Ansprüchen hervor. Dabei kann das Verfahren nach Anspruch 1 mit den Merkmalen eines, insbesondere mit den Merkmalen mehrerer Unteransprüche kombiniert werden.

Demgemäß kann das erfindungsgemäße Verfahren zur Auslaufsteuerung einer Asynchronmaschine noch die folgenden Merkmale aufweisen:

- Der Korrekturfaktor kann einen Wert zwischen 0,5 und 0,8 annehmen ($0,5 < \delta < 0,8$). Ein Korrekturfaktor ($\delta$) mit einem Wert zwischen 0,5 und 0,8 berücksichtigt die typischerweise bei einer Asynchronmaschine auftretenden Reibungsverluste. Es ist daher besonders vorteilhaft den Korrekturfaktor ($\delta$) aus dem vorgenannten Intervall zu wählen.

- Das DC-Bremsen kann nach einer vorgegebenen Zeitspanne abgebrochen werden. Der Abbruch des DC-Bremsens nach einer vorgegebenen Zeitspanne verhindert ein unnötig langes DC-Bremsen. Insbesondere kann das DC-Bremsen nach einer solchen Zeitspanne abgebrochen werden, nach der mit sehr großer Wahrscheinlichkeit die Asynchronmaschine zum vollständigen Stillstand gekommen ist.

- Das DC-Bremsen kann auf der Basis der Detektion eines Stromanstieges im Motorstrom, während des DC-Bremsvorganges abgebrochen werden. Der detektierte Stromanstieg im Motorstrom erlaubt eine einfache Detektion für den Stillstand der Asynchronmaschine. Auf diese Weise kann sichergestellt werden, dass das DC-Bremsen erst nach dem vollständigen Stillstand der Asynchronmaschine abgebrochen wird.

- Die Asynchronmaschine kann während des Hochlaufens aus dem Stillstand bis zur Betriebsdrehzahl oder einer gewünschten Drehzahl über ein Steuergerät und ein Netz-Schütz mit einer Stromquelle verbunden sein. Während des Abbremsens kann die Asynchronmaschine über ein Steuergerät und ein Reversier-Schütz mit der Stromquelle verbunden sein. Zu Beginn des Abbremsvorgangs kann die Asynchronmaschine durch das Steuergerät von der Stromversorgung getrennt werden. Weiterhin kann die elektrische Verbindung von dem Netz-Schütz auf das Reversier-Schütz umgeschaltet werden, anschließend kann die Asynchronmaschine im Reversierbetrieb, gesteuert von dem Steuergerät, mit einem phasenanschnittsgesteuerten und langsam ansteigenden Motorstrom abgebremst werden.

- Die Bestimmung des Wertes der Startenergie ($E_{start}$) kann durch Integration der Luftspaltleistung ($P_{LSP}$) über die Startzeit ($t_{start}$) der Asynchronmaschine erfolgen. Alternativ kann der Wert der Startenergie ($E_{start}$) durch Summation der Luftspaltleistung ($P_{LSP}$) über die Anzahl der Netzperioden ($L_{etart}$) für den Anlauf der Asynchronmaschine ermittelt werden. Die zuvor beschriebene Bestimmung des Wertes der Startenergie ($E_{start}$) ist besonders einfach, effektiv und genau.

- Die Bestimmung der Bremsenergie ($E_{stop}$) kann durch Integration der Luftspaltleistung ($P_{LSP}$) über die Stopzeit ($E_{stop}$) der Asynchronmaschine erfolgen. Alternativ kann die Bestimmung der Bremsenergie ($E_{stop}$) durch Summation der Luftspaltleistung ($P_{LSP}$) über die Anzahl der Netzperioden ($L_{stop}$) für das Abbremsen der Asynchronmaschine erfolgen. Die zuvor beschriebene Bestimmung der Bremsenergie ($E_{stop}$) ist besonders einfach, effektiv und genau.

Weitere vorteilhafte Ausgestaltung des erfindungsgemäßen Verfahrens gehen aus den vorstehend nicht angesprochenen Unteransprüchen sowie insbesondere aus der Zeichnung hervor. Zur weiteren Erläuterung der Erfindung wird nachfolgend auf die Zeichnungen Bezug genommen, in der bevorzugte Ausführungsformen schematisiert dargestellt sind. Dabei zeigt deren

Fig. 1    eine Asynchronmaschine mit einer Einrichtung zur Auslaufsteuerung, und

Fig. 2    Stromverläufe an der Asynchronmaschine während der Anlaufphase und der Abbremsphase der Asynchronmaschine.

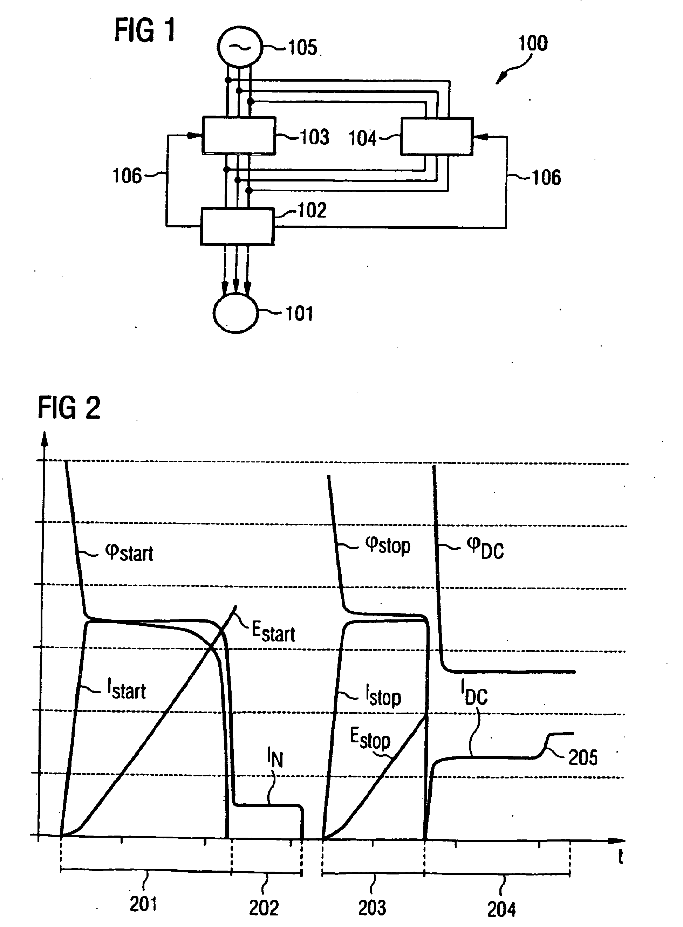

Fig. 1 zeigt eine Einrichtung 100 zur Auslaufsteuerung einer Asynchronmaschine 101. Die Einrichtung 100 zur Auslaufsteuerung umfasst eine Steuergerät 102, ein Netz-Schütz 103 und ein Reversier-Schütz 104. Das Netz-Schütz 103 ist eingangsseitig mit einer Stromquelle 105 verbindbar oder verbunden. Ausgangsseitig ist das Netz-Schütz 103 mit dem Steuergerät 102 verbunden, welches wiederum mit der Asynchronmaschine 101 verbunden ist. Das Reversier-Schütz 104, welches das Netz-Schütz 103 überbrückt, ist eingangsseitig mit der Stromquelle 104 verbindbar oder verbunden, ausgangsseitig ist das Reversier-Schütz ebenfalls mit dem Steuergerät 102 verbunden. Das Netz-Schütz 103 und das Reversier-Schütz 105 sind über Steuerleitungen 106 mit dem Steuergerät 102 verbunden. Das Netz-Schütz 103 und das Reversier-Schütz 104 sind durch das Steuergerät 102 schaltbar.

Das Steuergerät 102 kann insbesondere die Funktion eines Sanftstarters aufweisen. Durch einen Sanftstartern können sowohl die Anlaufströme als auch die Anlaufdrehmomente der Asynchronmaschine 101 begrenzt werden. So kann die Asynchronmaschine 101 aus dem Stillstand bis auf eine gewünschte Betriebsdrehzahl, insbesondere die Nenndrehzahl, langsam hochgefahren werden. Ein derartiger Sanftstarter kann insbesondere nach dem Prinzip der Phasenanschnittssteuerung arbeiten. Das Steuergerät 102 ist ebenfalls dazu geeignet eine elektrische Startenergie ($E_{start}$) zu messen und zu speichern. Weiterhin ist das Steuergerät 102 dazu geeignet einen DC-Bremsvorgang für die Asynchronmaschine 101 zu steuern. Dabei werden zwei der drei Pole der Asynchronmaschine 101 mit einem gleichgerichteten Wechselstrom beaufschlagt. Um einen sanft einsetzenden DC-Bremsvorgang zu realisieren, kann dieser nach der Art einer Phasenanschnittsteuerung geregelt sein.

Die Asynchronmaschine 101 kann insbesondere zum Antrieb von Werkzeugen oder Maschinen mit hohen Massenträgheitsmomenten verwendet werden. Beispielsweise kann die Asynchronmaschine 101 eine Hobelmaschine, Fräse oder Kreissäge in der holzverarbeitenden Industrie antreiben.

Die Asynchronmaschine 101 ist während des Anlaufens über das Netz-Schütz 103 und das Steuergerät 102 mit der Stromquelle 105 verbunden. Während die Asynchronmaschine 101 auf ihre Betriebsdrehzahl beschleunigt wird, wird die der Asynchronmaschine 101 zugefügte elektrische Startenergie ($E_{start}$) gemessen und gespeichert. Die Messung und Speicherung der Startenergie ($E_{start}$) erfolgt mit Hilfe des Steuergerätes 102.

Die Startenergie ($E_{start}$) berechnet sich als Integral der der Asynchronmaschine 101 zugeführten Luftspaltleistung $P_{LSP}$ über die Startzeit ($t_{start}$) (vergl. Gleichung 1) .

$$E_{start} = \int_{t_{start}} P_{LSP} \tag{1}$$

Es wird in diesem Zusammenhang auf die Luftspaltleistung ($P_{LSP}$) abgestellt, da der Wert der mechanischen Leistung nicht ohne weiteres einer Messung zugänglich ist. Zwischen der elektrischen Leistung und der mechanischen Leistung liegt eine durch verschiedene Verluste verursachte Differenz. Zu den Verlusten tragen insbesondere Reibungsverluste sowie ohmsche und induktive Verluste im Ständer und Rotor der Asynchronmaschine bei. Da die Ständerverluste im allgemeinen bekannt sind, ist die Leistung im Luftspalt zwischen Ständer und Rotor (Luftspaltleistung, $P_{LSP}$) gut zu berechnen, und wird daher im Folgenden als Bezugsgröße verwendet.

Die der Asynchronmaschine 101 zugeführte Luftspaltleistung ($P_{LSP}$) berechnet sich also als Differenz aus der der Asynchronmaschine 101 zugeführten elektrischen Leistung ($P_{el}$) abzüglich der Verlustleistung ($P_v$) im Ständer der Asynchronmaschine 101 (vergl. Gleichung 2).

$$P_{LSP} = P_{el} - P_v \tag{2}$$

Gleichung 3 gibt die Berechnung der Luftspaltleistung ($P_{LSP}$) wieder, wobei die elektrische Leistung ($P_{el}$) und die Verlustleistung ($P_v$) am Ständer der Asynchronmaschine 101 jeweils über eine Netzperiode aufsummiert werden.

($S_p$) bezeichnet die Anzahl der Abtastwerte pro Netzperiode.

$$P_{LPS} = \sqrt{3}\,\frac{1}{S_p}\sum_{i=1}^{S_p}\left(U_i I - I_i^2 R\right) \qquad (3)$$

Alternativ zu der in Gleichung 1 angegebenen Integration der Luftspaltleistung ($P_{LSP}$) über die Startzeit ($t_{start}$) kann die Startenergie ($E_{start}$) durch eine Aufsummierung über die Anzahl der Netzperioden ($L_{start}$) für den Anlauf der Asynchronmaschine 101 berechnet werden (vergl. Gleichung 4).

$$E_{start} = \sum_{p=1}^{L_{start}}\left(\sqrt{3}\,\frac{1}{S_p}\sum_{i=1}^{S_p}\left(U_i I - I_i^2 R\right)\right) \qquad (4)$$

Nach dem Hochlaufen der Asynchronmaschine 101 bis zu einer gewünschten Drehzahl, wird der für die Startenergie ($E_{start}$) ermittelte Wert von dem Steuergerät 102 gespeichert.

Vor dem eigentlichen Abbremsen der Asynchronmaschine 101 wird diese durch das Steuergerät 102 von der elektrischen Stromzufuhr getrennt. Dies kann beispielsweise durch eine Thyristorschaltung realisiert sein, die von dem Steuergerät 102 gesteuert wird. Anschließend wird die elektrische Verbindung zwischen dem Steuergerät 102 und der Drehstromquelle 104 von dem Netz-Schütz 103 auf das Reversier-Schütz 105 umgeschaltet. Nach dem Umschalten überbrückt das Reversier-Schütz 105 das Netz-Schütz 103.

Im Reversierbetrieb wird die Reihenfolge der Phasen an der Asynchronmaschine 101 vertauscht. Durch eine solche Reversierung der Phasen wird ein Drehfeld im Ständer der Asynchronmaschine 101 erzeugt, welches einen zur aktuellen Drehrichtung des Rotors der Asynchronmaschine 101 gegenläufigen Drehsinn aufweist. Die zueinander gegenläufigen Drehfelder des Stators und des Rotors der Asynchronmaschine 101 bewirken ein großes Bremsmoment am Rotor der Asynchronmaschine 101. Das auf diese Weise realisierte Reversierbremsen weist im Vergleich zu DC-Bremsen mit einem gleichgerichteten Wechselstrom einen lückenlosen Stromverlauf auf und sorgt so für ein vergleichsweise deutlich höheres Bremsmoment. Durch ein Abbremsen der Asynchronmaschine 101 im Reversierbetrieb, wird gleichzeitig der Gefahr begegnet, dass die Asynchronmaschine 101 durch den DC-Bremsvorgang wieder beschleunigt anstatt abgebremst wird.

Die Gefahr eines erneuten Beschleunigens der Asynchronmaschine 101 besteht, wenn diese mit einem gleichgerichteten Wechselstrom als DC-Bremsstrom abgebremst wird. Die zugeführte Bremsenergie ($E_{stop}$) im Reversierbetrieb wird so groß gewählt sein, dass am Ende des Bremsvorgangs die Asynchronmaschine 101 noch geringfügig nachläuft, sich aber in keinem Fall entgegen der ursprünglichen Drehrichtung dreht (Rückwärtslauf).

Die Bestimmung der Bremsenergie ($E_{stop}$) kann auf gleiche Weise wie die Bestimmung der Startenergie ($E_{start}$) erfolgen (vgl. Gleichung 4). Gleichung 5 gibt eine analoge Möglichkeit zur Bestimmung der Bremsenergie ($E_{stop}$) an.

$$E_{stop} = \sum_{p=1}^{L_{stop}}\left(\sqrt{3}\,\frac{1}{S_p}\sum_{i}^{S_p}\left(U_i I - I_i^2 R\right)\right) \qquad (5)$$

Im Idealfall wäre die Bremsenergie ($E_{stop}$) gleich der Startenergie ($E_{start}$). In diesem Fall würde die Asynchronmaschine 101 am Ende des Bremsvorganges im Reversierbetrieb auf den Punkt genau stehen bleiben. Durch verschiedene Einflussgrößen, wie Reibungsverluste, Näherungsfehler, Abtastfehler oder temperaturabhängige Veränderung des Ständerwiderstandes, ist es aber sehr wahrscheinlich, dass die benötigte Bremsenergie ($E_{stop}$) ungleich der Startenergie ($E_{start}$) ist. Die zum Abbremsen der Asynchronmaschine 101 eingesetzte Bremsenergie ($E_{stop}$) wird daher gemäß Formel 6 berechnet.

$$E_{stop} = \delta \cdot E_{start} \qquad (6)$$

Zur Berechnung der Bremsenergie ($E_{stop}$) wird die Startenergie ($E_{start}$) mit einem Faktor zwischen 0 und 1 idealerweise mit einem Faktor zwischen oder gleich 0,5 und 0,8 beaufschlagt ($0 < \delta < 1$; $0,5 \leq \delta \leq 0,8$). Durch Versuche oder einem Justierdurchlauf im konkreten Anwendungsfall kann ein optimaler Bereich oder ein optimaler Wert für $\delta$ ermittelt werden.

Zum weiteren Abbremsen der Asynchronmaschine 101, nachdem diese mit einer Bremsenergie ($E_{stop}$) gemäß Formel 6 beaufschlagt wurde, werden zwei Phasen der Asynchronmaschine 101 mit einem gleichgerichteten Wechselstrom beaufschlagt, so dass die Restdrehzahl der Asynchronmaschine 101 bis zum endgültigen Stillstand durch DC-Bremsen abgebaut wird.

Fig. 2 zeigt die zeitlichen Verläufe der Startenergie ($E_{start}$), des Startstromes ($I_{start}$) und des Phasenanschnitts ($\varphi_{start}$) als Funktion der Zeit t. Die Werte der vorgenannten Größen sind in Fig. 2 in beliebigen Einheiten über der Zeit t dargestellt. Die Verläufe von $E_{start}$, Istart und $\varphi_{start}$ sind sowohl für die Zeit 201 dargestellt, in der die Asynchronmaschine 101 hochläuft, als auch für die Zeit 202, in der die Asynchronmaschine 101 bei ihrer Betriebsdrehzahl läuft.

Zum Start der Asynchronmaschine 101 aus dem Stillstand, wird der Phasenanschnitt ($\varphi_{start}$) von dem Steuergerät 102 so gesteuert, dass der Motorstrom ($I_{start}$) während der Startphase 201 langsam bis auf einen vorgegebenen Begrenzungswert ansteigt. Typischerweise beträgt ein derartiger Wert, welcher in Fig. 2 durch ein Plateau im Motorstrom ($I_{start}$) zu erkennen ist, das 3-5-fache der Nennbelastung der Asynchronmaschine 101. Zu dem Zeitpunkt, an dem die Asynchronmaschine 101 ihre Betriebsdrehzahl erreicht hat, sinkt der Phasenanschnitt ($\varphi_{start}$) auf Null ab, und der Motorstrom ($I_{start}$) erreicht einen Plateauwert (IN) bei dem die Asynchronmaschine 101 mit Betriebsdrehzahl betrieben wird.

Der Start der Asynchronmaschine kann ebenfalls durch eine lineare Phasenanschnittsrampe erfolgen, in diesem Fall wird der Motorstrom nicht auf einen festen Plateauwert begrenzt. Gleiches gilt für ein etwaiges Abbremsen der Maschine. Die Asynchronmaschine kann stets mit beiden möglichen Verfahren, also einer Begrenzung des Motorstroms auf einen vorgegebenen Wert und eine lineare Phasenanschnittsrampe, sowohl gestartet, wie auch abgebremst werden.

Während der Zeit 201 des Hochlaufens der Asynchronmaschine 101 wird von dem Steuergerät 102 die zum Beschleunigen der Asynchronmaschine 101 bis auf die Betriebsdrehzahl aufgewendete Energie fortlaufend gemessen. Der aufsummierte bzw. aufintegrierte maximale Wert der Startenergie ($E_{start}$) wird nach Erreichen der Betriebsdrehzahl der Asynchronmaschine 101 von dem Steuergerät 102 gespeichert.

Zum Abbremsen der Asynchronmaschine 101 wird diese zunächst durch das Steuergerät 102 von der Stromquelle 105 getrennt. Nach erfolgtem Umschalten der Verbindung zwischen der Stromquelle 105 und dem Steuergerät 102 von dem Netz-Schütz 103 auf das Reversier-Schütz 104 wird die Asynchronmaschine 101 im Reversierbetrieb mit einem langsam ansteigenden Motorstrom ($I_{stop}$) beaufschlagt. Dabei kann der Phasenanschnitt ($\varphi_{stop}$) beispielsweise so geregelt, dass der Motorstrom ($I_{stop}$) während der Zeit 203 des Reversierbetriebes langsam bis auf den ca. 3-5-fachen Wert der Nennbelastbarkeit der Asynchronmaschine 101 ansteigt.

Während der Zeitspanne des Reversierbetriebs wird der Asynchronmaschine 101 eine elektrische Energie ($E_{stop}$) zugeführt, die geringer ist als die Startenergie ($E_{start}$). Die Asynchronmaschine 101 wird dabei insbesondere mit einer Bremsenergie ($E_{stop}$) beaufschlagt, welche in etwa 50% bis 80% der Startenergie ($E_{start}$) entspricht. Gemäß Gleichung 6 liegt $\delta$ in etwa zwischen 0,5 und 0,8.

Nach Ende des Reversierbetriebes weist die Asynchronmaschine 101 eine restliche kinetische Energie in Form einer Restdrehzahl auf. Aus diesem Grund schließt sich im Idealfall nahtlos an den Reversierbetrieb eine DC-Bremsphase 204 an. Während des DC-Bremsens werden zwei Phasen der Asynchronmaschine 101 mit einer gleichgerichteten Wechselspannung beaufschlagt. Damit der DC-Bremsvorgang sanft einsetzt, wird auch beim DC-Bremsen der Phasenanschnitt ($\varphi_{DC}$) von einem anfänglich hohen Wert bis auf einen vorgegebenen Wert, im Extremfall bis auf 0 herunter gefahren. In Folge dessen steigt der Bremsstrom ($I_{DC}$) welcher an der Asynchronmaschine 101 anliegt, langsam an.

Der an der Asynchronmaschine 101 anliegende DC-Bremsstrom ($I_{DC}$) weist bei Stillstand der Asynchronmaschine 101 eine Erhöhung 205 auf. Anhand der Erhöhung 205 in dem an der Asynchronmaschine 101 anliegenden DC-Bremsstrom ($I_{DC}$) kann der Stillstand der Asynchronmaschine 101 detektiert werden.

**Patentansprüche**

1. Verfahren zur Auslaufsteuerung einer Asynchronmaschine (101), die folgende Schritte umfasst:

- Bestimmen und Speichern des Wertes einer Startenergie ($E_{start}$) während des Hochlaufens der Asynchronmaschine (101) aus dem Stillstand bis zur Betriebsdrehzahl,
- Abbremsen der Asynchronmaschine (101) im Reversierbetrieb mit einer Bremsenergie ($E_{stop}$) die der Startenergie ($E_{start}$) multipliziert mit einem Korrekturfaktor ($\delta$) entspricht ($E_{stop} = \delta E_{start}$), wobei der Korrekturfaktor ($\delta$) einen Wert zwischen 0 und 1 ($0 < \delta < 1$) annimmt, und
- weiteres Abbremsen der Asynchronmaschine (101) durch DC-Bremsen nach erfolgtem Abbremsen im Reversierbetrieb.

**2.** Verfahren nach Anspruch 1,
**dadurch gekennzeichnet, dass** der Korrekturfaktor ($\delta$) einen Wert zwischen 0,5 und 0,8 annimmt (0,5 < $\delta$ < 0,8).

**3.** Verfahren nach Anspruch 1 oder 2, **gekennzeichnet durch,** einen Abbruch des DC-Bremsens nach einer vorgegebenen Zeitspanne.

**4.** Verfahren nach Anspruch 1 oder 2, **gekennzeichnet durch**, einen Abbruch des DC-Bremsens auf Basis der Detektion eines Stromanstiegs im Verlauf des DC-Bremsstromes.

**5.** Verfahren nach einem der vorstehenden Ansprüche,
**dadurch gekennzeichnet, dass** die Asynchronmaschine während des Hochlaufens über ein Netz-Schütz (103) und ein Steuergerät (102) mit einer Stromquelle (104) verbunden ist und während des Abbremsens über ein Reversier-Schütz (105) und das Steuergerät (102) mit der Stromquelle (104) verbunden ist, zusätzlich die folgenden Schritte umfasst:

- Abschalten der Asynchronmaschine (101) von der Stromversorgung durch das Steuergerät (102) zu Beginn des Abbremsens,
- Umschalten der Verbindung zwischen der Stromquelle (104) und dem Steuergerät (102) von dem Netz-Schütz (103) auf das Reversier-Schütz (104),
- Abbremsen der Asynchronmaschine (101) mit einem durch Phasenanschnitt gesteuerten, bis auf einen vorgegebenen Wert ansteigenden Motorstrom im Reversierbetrieb, gesteuert von dem Steuergerät (102).

**6.** Verfahren nach einem der vorstehenden Ansprüche, **dadurch gekennzeichnet , dass** die Bestimmung des Wertes der Startenergie ($E_{start}$ durch Integration der Luftspaltleistung ($P_{LSP}$) über die Startzeit ($t_{start}$) der Asynchronmaschine (101) erfolgt.

**7.** Verfahren nach einem der Ansprüche 1 bis 5,
**dadurch gekennzeichnet , dass** die Bestimmung des Wertes der Startenergie ($E_{start}$) durch Summation der Luftspaltleistung ($P_{LSP}$) über die Anzahl der Netzperioden ($L_{start}$) für den Anlauf der Asynchronmaschine (101) erfolgt.

**8.** Verfahren nach einem der vorstehenden Ansprüche, **dadurch gekennzeichnet, dass** die Bestimmung der Bremsenergie ($E_{stop}$) durch Integration der Luftspaltleistung ($P_{LSP}$) über die Stopzeit ($t_{stop}$) der Asynchronmaschine (101) erfolgt.

**9.** Verfahren nach einem der Ansprüche 1 bis 7,
**dadurch gekennzeichnet, dass** die Bestimmung der Bremsenergie ($E_{stop}$) durch Summation der Luftspaltleistung ($P_{LSP}$) über die Anzahl der Netzperioden ($L_{stop}$) für das Abbremsen der Asynchronmaschine (101) erfolgt.

**Claims**

**1.** Method for run down control of an asynchronous machine (101), which run down control comprises the following steps:

- determining and storing the value of a start energy ($E_{start}$) during the run up of the asynchronous machine (101) from rest up to the operating rotation speed,
- braking of the asynchronous machine (101) in the reversing mode with a braking energy ($E_{stop}$) which corresponds to the start energy ($E_{start}$) multiplied by a correction factor ($\delta$) ($E_{stop}$ = $\delta$ $E_{start}$), wherein the correction factor ($\delta$) assumes a value between 0 and 1 (0 < $\delta$ < 1), and
- further braking of the asynchronous machine (101) by DC braking after braking in the reversing mode.

**2.** Method according to Claim 1,
**characterized in that** the correction factor ($\delta$) assumes a value between 0.5 and 0.8 (0.5 < $\delta$ < 0.8).

**3.** Method according to Claim 1 or 2,
**characterized by** DC braking being terminated after a predetermined time period.

**4.** Method according to Claim 1 or 2,

**characterized in that** DC braking is terminated on the basis of the detection of a current rise in the profile of the DC braking current.

5. Method according to one of the preceding claims, **characterized in that** the asynchronous machine is connected to a power source (104) during run up via a mains contactor (103) and a controller (102), and is connected to the power source (104) via a reversing contactor (105) and the controller (102) during braking, additionally comprising the following steps:

- disconnecting the asynchronous machine (101) from the power supply by the controller (102) at the start of braking,
- switching the connection between the power source (104) and the controller (102) from the mains contactor (103) to the reversing contactor (104),
- braking the asynchronous machine (101) with a motor current in the reversing mode, controlled by the controller (102), which motor current is controlled by phase gating and rises up to a predetermined value.

6. Method according to one of the preceding claims,
**characterized in that** the value of the start energy ($E_{start}$) is determined by integration of the air-gap power ($P_{LSP}$) over the starting time ($t_{start}$) of the asynchronous machine (101).

7. Method according to one of Claims 1 to 5,
**characterized in that** the value of the start energy ($E_{start}$) is determined by summation of the air-gap power ($P_{LSP}$) over the number of mains cycles ($L_{start}$) for the starting of the asynchronous machine (101).

8. Method according to one of the preceding claims,
**characterized in that** the braking energy ($E_{stop}$) is determined by integration of the air-gap power ($P_{LSP}$) over the stopping time ($t_{stop}$) of the asynchronous machine (101).

9. Method according to one of Claims 1 to 7,
**characterized in that** the braking energy ($E_{stop}$) is determined by summation of the air-gap power ($P_{LSP}$) over the number of mains cycles ($L_{stop}$) for the braking of the asynchronous machine (101).


**Revendications**

1. Procédé de commande d'une machine (101 ) d'un moteur asynchrone pour qu'il tourne sur son erre, comprenant les stades suivants :

- on détermine et on mémorise la valeur d'une énergie (Estart ) de départ pendant la mise en vitesse du moteur (101 ) asynchrone de l'état d'arrêt jusqu'à la vitesse de rotation de fonctionnement,
- on freine le moteur (101 ) asynchrone en fonctionnement inverse par une énergie (Estop) de freinage qui correspond à l'énergie (Estart) multipliée par un facteur ($\delta$) de correction (Estop = $\delta$ Estart), le facteur ($\delta$) de correction prenant une valeur comprise entre ($0 < \delta < 1$), et
- on continue à freiner le moteur (101) asynchrone par freinage en courant continu après que le freinage en fonctionnement inverse a été effectué.

2. Procédé suivant la revendication 1,
**caractérisé en ce que** le facteur ($\delta$) de correction prend une valeur comprise entre 0,5 et 0,8 ($0,5 < \delta < 0,8$).

3. Procédé suivant la revendication 1 ou 2,
**caractérisé par** l'interruption du freinage en courant continu après un laps de temps prescrit.

4. Procédé suivant la revendication 1 ou 2,
**caractérisé par** l'interruption du freinage en courant continu sur la base de la détection d'une augmentation de courant dans la courbe du courant de freinage en courant continu.

5. Procédé suivant l'une des revendications précédentes, **caractérisé en ce que** le moteur asynchrone est relié, pendant la mise en vitesse, à une source (104) de courant par un contacteur (105) et par un appareil (102) de commande et, pendant le freinage, à la source (104) de courant par un contacteur (105) inverse et par l'appareil (102) de commande, comprenant supplémentairement le stade suivant :

- on sépare le moteur (101) asynchrone de l'alimentation en courant par l'appareil (102) de commande au début du freinage,
- on commute la liaison entre la source (104) de courant et l'appareil (102) de commande du contacteur (101) de réseau au contacteur (104) inverse,
- on freine le moteur (101) asynchrone par un courant de moteur en fonctionnement inverse commandé par retard de phase et croissant jusqu'à une valeur prescrite, sous la commande de l'appareil (102) de commande.

6. Procédé suivant l'une des revendications précédentes,
**caractérisé en ce que** l'on effectue la détermination de la valeur de l'énergie (Estart) de départ par intégration de la puissance (PLSP) d'entrefer sur le temps (tstart) de départ du moteur (101) asynchrone.

7. Procédé suivant l'une des revendications 1 à 5,
**caractérisé en ce que** l'on effectue la détermination de la valeur de l'énergie (Estart) de départ par sommation de la puissance (PSLP) d'entrefer sur le nombre des périodes (Lstart) des réseaux pendant le démarrage du moteur (101) asynchrone.

8. Procédé suivant l'une des revendications précédentes,
**caractérisé en ce que** l'on effectue la détermination de l'énergie (Estop) de freinage par intégration de la puissance (PLSP) d'entrefer sur le temps (tstop) d'arrêt du moteur (101) asynchrone.

9. Procédé suivant l'une des revendications 1 à 7,
**caractérisé en ce que** l'on effectue la détermination de l'énergie (Estop) de freinage par sommation de la puissance (PLSP) d'entrefer sur le nombre des périodes (Lstop) de réseau pendant le freinage du moteur (101) asynchrone.

# FIG 1

# FIG 2